# EUROPÄISCHE PATENTSCHRIFT

(11) **EP 1 916 046 B1**
(45) Veröffentlichungstag und Bekanntmachung des Hinweises auf die Patenterteilung: **23.05.2012**
(21) Anmeldenummer: 07118974.0
(22) Anmeldetag: 22.10.2007
(51) Int. Cl.: B23K 7/00, B23K 9/013, B23K 26/38, B23K 37/04

(54) **Verfahren und Vorrichtung zum maschinellen Schneiden eines plattenförmigen Werkstücks**
Method and device for machine-cutting a plate-shaped workpiece
Dispositif et méthode de découpe de tôles

(30) Priorität: 24.10.2006 DE 102006050686; 17.04.2007 DE 102007018416
(43) Veröffentlichungstag der Anmeldung: 30.04.2008
(73) Patentinhaber: Messer Cutting Systems GmbH, 64823 Gross-Umstadt (DE)
(72) Erfinder: Goeller, Ingo, D-64823 Gross-Umstadt (DE)
(74) Vertreter: Staudt, Armin Walter

(56) Entgegenhaltungen:
- EP-A- 1 342 527
- EP-A- 1 582 863
- DE-U1- 29 812 538
- JP-A- 11 248 643
- US-A- 4 187 051

## Beschreibung

Die Erfindung betrifft ein Verfahren zum maschinellen Schneiden eines plattenförmigen Werkstücks, umfassend ein berührungsloses, optisches Erfassen der Lage und/oder der Geometrie und/oder von Abmessungen des Werkstücks mittels einer Kamera, und eine Auswertung mittels Bildverarbeitung (siehe EP-A-1 342 527).

Weiterhin betrifft die Erfindung eine Vorrichtung zum maschinellen Schneiden von plattenförmigen Werkstücken, umfassend eine Kamera zum berührungslosen, optischen Erfassen der Lage und/oder der Geometrie und/oder von Abmessungen des Werkstücks, und eine Auswerteeinrichtung mit Bildverarbeitung von mittels der Kamera erfasster Daten.

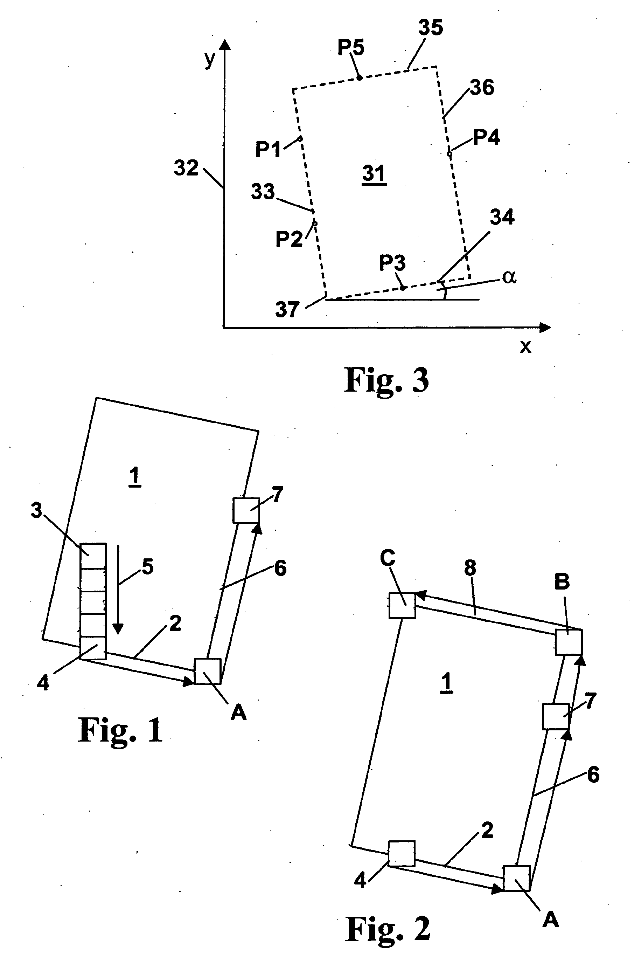

Die aus dem Stand der Technik bekannten Vorgehensweisen und Vorrichtungen und deren Nachteile werden im Folgenden anhand von Figur 3 näher erläutert:
Figur 3 zeigt die Erkennung der Lage und Größe einer rechteckigen Platte 31 in Bezug zum Maschinenkoordinatensystem 32. Zunächst wird der Winkel α bestimmt, der die Lage der Platten-Hauptachsen relativ zum Maschinenkoordinatensystem 32 beschreibt.

Hierzu werden zwei Punkte P1 und P2 benötigt, die sich auf einer gemeinsamen Kante 33 der Platte 31 befinden.

Zur Bestimmung eines Eckpunktes 37 der Platte 31 wird ein dritter Punkt P3 benötigt, der sich auf der weiteren Kante 34 des zu bestimmenden Eckpunktes 37 befindet. Der Eckpunkt 37 befindet sich dann im Schnittpunkt der Kanten 33, 34.

Zur Bestimmung der Breite und Größe der Platte 31 sind jeweils auf den beiden anderen Kanten weitere Punkte P4 und P5 zu ermitteln.

Für die Aufnahme der Punkte P1 bis P5 sind eine Vielzahl von Methoden bekannt. Im einfachsten Fall erfolgt die Aufnahme manuell. Diese Methode ist jedoch ungenau und zeitaufwändig.

Bei der automatischen Aufnahme der Punkte P1 bis P5 wird ein mechanischer oder optischer Sensor zur Aufnahme eines Punktes jeweils von einem vorgegebenen Punkt auf der Platte in Richtung der x- oder y-Achse verfahren, bis der "Verlust" der Platte 31 gemeldet wird. Mit einer langsameren Geschwindigkeit wird nun in Gegenrichtung gefahren bis der Sensor wieder Material erkennt. Das Sensorsignal ist jedoch störanfällig, insbesondere wird der Sensor durch die Plattenauflage, das ist in der Regel ein Gitterrost, beeinflusst.

Für die Vermessung von Objekten werden auch aufwändige Koordinatenmessgeräte eingesetzt. Dieses bestehen meist aus drei Verschiebeachsen, die so aufeinander aufgebaut sind, dass sie ein kartesisches Koordinatensystem aufspannen. Die Position der einzelnen Verschiebeachsen wird im Allgemeinen durch jeweils ein Längenmesssystem bestimmt. Bei dem in der DE 39 411 44 A1 beschriebenen Koordinatenmessgerät erfassen mehrere schwenkbare Videokameras die Geometrie des zu bearbeitenden Bauteils.

Aus der DE 100 16 195 A1 ist ein weiteres Koordinatenmessgerät zur optischen Vermessung von Objekten unter Einsatz einer Kamera und einer Beleuchtungseinheit bekannt. Dabei nimmt die Kamera ein Bild eines zu vermessenden Objekts im Gegenlicht der Beleuchtungseinheit auf, wobei das Objekt zwischen der Beleuchtungseinheit und der Kamera angeordnet ist, so dass es einen Teil der von der Beleuchtungseinheit in die Kamera einfallenden Lichtstrahlen verdeckt. Diese Anordnung erzeugt ein kontrastreiches Bild, was die Auswertung der so gewonnenen Bildinformationen durch digitale Bildverarbeitung erleichtert. Als Lichtquelle werden Laser oder Leuchtdioden verwendet.

Ein exaktes Vermessen von Objekten anhand der bekannten Methoden erfordert eine aufwändige Justage, einen hohen Zeitaufwand und die Einhaltung konstanter Umgebungsparameter während des Messvorgangs. Diese Konstanz ist beim Brennschneiden von Werkstücken unter Produktionsbedingungen in üblichen Fertigungsbetrieben jedoch nicht ohne weiteres zu gewährleisten. Beispielsweise kann sich die Beleuchtung des Werkstücks infolge der Bewegung von Personen und Maschinen in der Umgebung laufend ändern. Auch der hohe Zeitaufwand ist unter Produktionsbedingungen im Allgemeinen nicht akzeptabel.

### Technische Aufgabe

Insoweit liegt der Erfindung die Aufgabe zugrunde, ein Verfahren anzugeben, das bei geringem Zeitaufwand eine präzise und reproduzierbare Erkennung der Lage, und/oder Geometrie und/oder von Abmessungen des zu bearbeitenden Werkstücks - auch unter Produktionsbedingungen - ermöglicht, sowie eine dafür geeignete Vorrichtung bereitzustellen.

Es ist außerdem bekannt, technische Zeichnungen zu digitalisieren und die Daten in die Maschinensteuerung einzuspeisen. Dabei wird mit Hilfe eines Fotoskopes die aufgezeichnete Kontur abgefahren, als x- und y-Koordinaten in der Maschinensteuerung aufgenommen und zu einem Bauteilschnitt zusammengeführt. Die Methode ist jedoch sehr langsam, ungenau und sie erlaubt nur die Erfassung von Außenkonturen.

In ähnlicher Weise werden auch Restplatten digitalisiert. Dabei werden Punkte auf der Kontur der Restplatte manuell angefahren und die Daten in die Maschinensteuerung aufgenommen und zu einer Restplatte zusammengeführt. Die Methode ist jedoch ungenau, zeitaufwändig und erlaubt keine Aufnahme von Kreiskonturen und Innenkonturen.

Insoweit liegt der Erfindung auch die Aufgabe zugrunde, ein verbessertes Verfahren für die Digitalisierung von technischen Zeichnungen und Restplatten anzugeben.

Diese Aufgabe wird erfindungsgemäß durch ein Verfahren gemäß Anspruch 1 gelöst.

Beim erfindungsgemäßen Verfahren erfolgt die Lage- und Konturenerfassung eines Werkstücks mittels Kamera und Bildverarbeitung. Zur Ermittlung einer Werkstückkante wird der Abbildungsbereich der Kamera über der Werkstückoberfläche bewegt. Die Kamera wird dabei in der Regel über die Werkstückoberfläche geführt; sie kann aber auch ortsfest montiert sein.

Das grobe Lokalisieren der Werkstückkante erfolgt in einem ersten Betriebsmodus, in dem die Kamera mit niedriger Auflösung betrieben wird. Dies erlaubt ein schnelles Abscannen der Oberfläche, die im Folgenden auch als "Suchfahrt" bezeichnet wird. Ist eine Werkstückkante auf diese Weise lokalisiert worden, wird die Kamera in einen zweiten Betriebsmodus mit höherer optische Auflösung umgeschaltet und von dem betreffenden Bereich eine Aufnahme mit höherer Auflösung erzeugt. Diese Aufnahme wird mittels Bildauswertung ausgewertet. Die höhere Auflösung ermöglicht eine exakte Lageerkennung der betreffenden Kante und damit auch des Lagewinkels α in Bezug auf das Maschinenkoordinatensystem.

Die übrigen Kanten und Eckpunkte können auf die gleiche Weise ermittelt werden, wie dies oben anhand der Beschreibung von Figur 3 erläutert ist. Das erfindungsgemäße Verfahren erlaubt jedoch eine andere, schnellere Verfahrensweise. Denn nach dem Auffinden einer Werkstückkante kann die Kamera beziehungsweise der Abbildungsbereich der Kamera entlang der Kante bis zu einem Eckpunkt und von dort entlang der gesamten Kontur verfahren und so die Werkstückkontur sehr schnell ermittelt werden. Die vollständige Lage- und Kantenerkennung des Werkstücks ergibt sich somit aus einer Abfolge von Suchfahrten, Aufnahmen und Auswertungen.

Das Verfahren ist vom Material des Werkstücks im Wesentlichen unabhängig und zum Beispiel für Werkstück aus Metall, Kunststoff, Holz, Keramik oder Glas geeignet.

Vorzugsweise wird mittels der Kamera beim Betrieb im zweiten Betriebsmodus mit höhere optischer Auflösung eine Abbildung im Bereich der aufgefundenen Werkstückkante erzeugt, und die Abbildung wird mittels der Bildverarbeitung ausgewertet.

Die Kamera oder der Aufnahmebereich der Kamera wird somit zunächst über der Oberfläche des Werkstücks positioniert, so dass eine Aufnahme einer ersten Teilfläche erhalten wird. Die Kamera ist dabei - oder sie wird dabei - in den ersten Betriebsmodus eingestellt, und zwar derart, dass die Oberfläche des Werkstücks im Wesentlichen (und im Idealfall vollständig) weiß erscheint. Dies geschieht zum Beispiel durch Einstellen eines hohen Kontrastwertes. Die so erzeugte Aufnahme besteht somit im Wesentlichen aus weißen Pixeln, was hier als hoher "Weißwert" bezeichnet wird. Der Weißwert der betreffenden Teilfläche und seine Positionsdaten in Bezug auf das Maschinenkoordinatensystem werden ermittelt und gespeichert.

Daraufhin wird die Kamera (oder der Erfassungsbereich der Kamera) im ersten Betriebsmodus - und damit sehr schnell - in einer vorgegebenen Bewegungsrichtung bewegt, und es werden - ebenfalls sehr schnell - kontinuierlich Aufnahmen sukzessive aufeinanderfolgender Teilflächen erzeugt, die jeweils mit der vorherigen Teilfläche geringfügig überlappen. Gleichzeitig und ohne Unterbrechung der Suchfahrt wird die jeweilige Aufnahme hinsichtlich ihres "Weißwertes" und der lokalen Position ausgewertet, und wenigstens die Positionsdaten werden gespeichert. Die Auswertung umfasst außerdem einen Vergleich mit einem vorgegebenen Grenzwert für den Weißwert, und alternativ oder ergänzend dazu, einen Vergleich mit dem Weißwert der vorherigen Aufnahme (dieser Abgleich wird hier auch als "Hell-Dunkel-Vergleich" bezeichnet).

Durch sukzessives Weiterführen der Kamera in derselben Bewegungsrichtung werden auf diese Weise die Teilbereiche bis zu einer Werkstückkante sehr schnell abgescannt. Dabei erscheint die Werkstückoberfläche für die Kamera in der Regel etwa gleichmäßig weiß. Im Bereich einer Werkstückkante werden zunehmend jedoch dunkle (schwarze) Pixel erkannt, die von hellen Pixeln umgeben sein können (die zum Beispiel vom Gitter eines Schneidrosts herrühren).

Ergibt sich eine Unterschreitung eines voreingestellten oder variablen Grenzwertes für den Weißwert und/oder ein Unterschied der beiden Weißwerte überlappender Teilflächen, der einen Grenz-Differenzwertes überschreitet, so wird dies als Hinweis auf das Vorhandensein einer Werkstückkante gewertet.

Von der im Hell-Dunkel-Vergleich aufgefallenen Teilfläche - oder von einem ausgewählten Teilbereich derselben - wird daraufhin mittels der Kamera eine weitere Aufnahme erzeugt, jedoch diesmal mit einer höheren Auflösung. Die höhere Auflösung kann eine höhere Pixelanzahl pro Flächeneinheit und/oder eine höhere optische Vergrößerung und/oder eine größere Anzahl an Farben beinhalten. Die höher aufgelöste Aufnahme wird daraufhin mittels Bildauswertung ausgewertet und anhand dessen die Lage der Werkstückkante bestimmt.

Auf diese Art und Weise wird überdies auch ein exaktes Erfassen abgefaster Werkstückkanten ermöglicht.

Im Hinblick auf diese Verfahrensweise hat es sich als günstig erwiesen, wenn die ersten Aufnahmeparameter der Kamera bei Verfahrensschritt b) derart eingestellt werden, dass die Aufnahme einen Weißwert mit mindestens 80 %, vorzugsweise mindestens 90%, weißen Pixeln zeigt.

Durch einen hohen Weißwert werden etwaige dunkle Flecken überblendet und es ergibt sich eine hohe Auswerteempfindlichkeit, so dass Fehlinterpretationen trotz hoher Abscangeschwindigkeit vermieden werden.

Außerdem hat es sich bewährt, wenn im Bejahensfall dem Verfahrensschritt f) eine Maßnahme vorangeht, bei der Flächenbereiche der Aufnahme mit überwiegend schwarzen Pixeln optisch oder rechnerisch ausgeblendet werden.

Diese Maßnahme ist darin begründet, dass beim Abscannen der Werkstückoberfläche oder eine technischen Zeichnung stets auch die Auflage des Werkstücks (beispielsweise ein Schneidrost) oder die Außenbegrenzung des Zeichenblatts erfasst wird, wo helle Bereiche umgeben von dunklen Bereichen vorhanden sein können. Diese hellen Bereiche, die nicht dem Werkstück zuzuordnen sind, können die Ermittlung der Kantenposition verfälschen. Daher werden die Bereiche mit hellen Pixeln, die umgeben von dunklen Pixeln sind, rechnerisch oder optisch verkleinert oder eliminiert, zum Beispiel durch rechnerisches Vergrößern der dunklen Bereiche, oder durch Überstrahlen oder durch Übersteuern der Kamera. Dadurch verschwinden die kleineren Bereiche mit hellen Pixeln, so dass letztlich die Grenze zwischen heller Werkstückkante und dunkler Umgebung gut erkennbar übrig bleibt. Deren Position ist somit genau zu erkennen, was die automatische Bildauswertung erleichtert. Die durch rechnerische oder optische Verkleinerung der dunklen Pixelbereiche erzeugte Verschiebung der Kante kann leicht berücksichtigt und entsprechend korrigiert werden.

In der Regel ist die Kamera bereits zur nächsten Teilfläche weitergefahren, bevor die Auswertung einen auffällig niedrigen Weißwert für eine Teilfläche liefert. Demgemäß wird eine Verfahrensweise bevorzugt, bei der im Bejahensfall dem Verfahrensschritt f) eine Maßnahme vorangeht, bei der die Kamera auf Basis der gespeicherten Positionsdaten auf die Teilfläche mit einem Weißwert unterhalb des Grenzwerts entgegen der Bewegungsrichtung zurückbewegt wird.

Die Kamera wird also erforderlichenfalls auf die im Hell-Dunkel-Vergleich aufgefallene Teilfläche zurück bewegt, deren Position gespeichert worden ist, wie oben beschrieben.

Insbesondere im Hinblick auf ein möglichst schnelles Durchführen der Lage- und Konturenerkennung erfolgt das Bewegen der Kamera gemäß Verfahrensschritt c) mit einer Bewegungsgeschwindigkeit von mindestens 20 m/min, vorzugsweise mindestens 35 m/min.

Als besonders vorteilhaft hat sich eine Ausführungsform des erfindungsgemäßen Verfahrens erwiesen, bei der der Grenzwert gemäß Verfahrensschritt d) variabel in Abhängigkeit des Weißwerts der vorherigen Teilflächen-Aufnahme eingestellt wird.

Hierbei erfolgt der Hell-Dunkel-Vergleich beim Abscannen der Oberfläche mittels der Kamera mit variablem Grenzwert. Dadurch werden Fehlinterpretationen vermieden, die sich infolge allmählicher optischer Veränderungen der Werkstückoberfläche ergeben können. Hier wären insbesondere Schattenfall oder Änderungen der Oberflächenbeschaffenheit zu nennen, wie etwa Verfärbungen oder unterschiedlich reflektierende Bereiche. Der neue Grenzwert wird dabei zum Beispiel anhand des durchschnittlichen Weißwertes der gesamten aktuellen Teilfläche gebildet oder auch anhand des Weißwertes in ausgewählten Bereiche der aktuellen Teilfläche, wobei die ausgewählten Bereiche dann in der Regel in einem Abschnitt der aktuellen Teilfläche liegen, der dem Überlappungsbereich mit der vorherigen Teilfläche zugewandt ist.

Es hat sich bewährt, als Kamera eine Graustufen-Kamera einzusetzen.

Eine Graustufen-Kamera liefert im Vergleich zu einer Farbkamera bei gleicher Datenmenge eine höhere lokale Auflösung. Geeignete digitale Kameras sind CCD- oder CMOS-Kameras

Weiterhin hat es sich als günstig erwiesen, im ersten Betriebsmodus die Blende der Kamera so einzustellen, dass eine Tiefenschärfe von mindestens 20 mm, vorzugsweise mindestens 30 mm, erhalten wird.

Dadurch können auch Werkstücke unterschiedlicher Dicke ohne aufwändige Nachjustierungen bearbeitet werden, da sich stets eine scharfe und exakt auswertbare Abbildung im zweiten Betriebsmodus ergibt. Insbesondere wird auch die Erkennung von abgefasten Werkstückkanten erleichtert.

Außerdem hat es sich als günstig erwiesen, wenn eine Kamera mit automatischem Zoom eingesetzt wird.

Dadurch wird gewährleistet, dass die Kamera immer auf die Oberfläche des zu bearbeitenden Werkstücks fokussiert ist.

In dem Zusammenhang ist es auch vorteilhaft, wenn die Kamera höhenverstellbar ist.

Dadurch kann auch bei wechselnden Dicken der zu vermessenden Werkstücke stets ein optimaler Arbeitsabstand zwischen Werkstückoberfläche und Kamera eingehalten werden (beispielsweise 50 mm).

Weiterhin hat es sich bewährt, eine Kamera mit einem Weitwinkelobjektiv einzusetzen.

Bei Einsatz eines Weitwinkelobjektivs (beispielsweise mit einer Brennweite von 28 mm) wird - bei gegebenem Arbeitsabstand - mit jeder Aufnahme mittels der Kamera eine vergleichsweise große Fläche erfasst und dadurch der Vorgang der Kanten- und Lagererkennung beschleunigt.

Nachfolgend wird die Erfindung anhand von Ausführungsbeispielen und einer Zeichnung näher erläutert. In der Zeichnung zeigt im Einzelnen:
- **Figur 1**: eine schematische Darstellung zur Erläuterung der Kantenfindung und Konturenerkennung mittels des erfindungsgemäßen Verfahrens,
- **Figur 2**: eine schematische Darstellung zur Ermittlung der Größe eines Werkstücks mittels des erfindungsgemäßen Verfahrens,
- **Figur 3**: eine schematische Darstellung zur Erläuterung der aus dem Stand der Technik bekannten Verfahrensweisen,
- **Figur 4**: eine schematische Darstellung zur Erläuterung der Digitalisierung von Zeichnungen und Bauteilen anhand des erfindungsgemäßen Verfahrens, und
- **Figur 5**: eine schematische Darstellung zur Erläuterung der Digitalisierung von Restbauteilen gemäß dem erfindungsgemäßen Verfahren.

### Ausführungsbeispiel

### 1. Konturerkennung mittels Kamera zur Ermittlung der Plattenlage und -größe

**Figur 1** bezieht sich auf die Findung der Ecke A eines Werkstücks in Form einer rechteckigen Platte. Jede andere Ecke kann ebenfalls gefunden werden. Hierbei ändert sich eventuell der Startpunkt und/oder die Richtungen der Suchfahrt.

### Schritt 1:

Mit Hilfe einer mitfahrenden und höhenverstellbaren CMOS- oder CCD-Graustufenkamera wird bei einer Fahrt auf die Platte 1 oder von der Platte 1 herunter aus den aufgenommenen Bildern 3 eine Kante 2 erkannt.

Hierzu wird die Kamera zunächst auf einer beliebigen Stelle über der Oberfläche der Platte 1 in einem Arbeitsabstand von 50 mm positioniert. Die Kamera ist mit einer Autofokusfunktion und mit einem Weitwinkelobjektiv mit einer Brennweite von 28 mm ausgerüstet. Die Aufnahmeparameter der Kamera werden so eingestellt, dass die Oberfläche der Platte 1 im Wesentlichen weiß erscheint. Dies geschieht durch automatisches Einstellen einer ausreichend langen Beleuchtungsdauer und eines ausreichend hohen Kontrastwertes.

Bei der so erzeugten Aufnahme der betreffenden Teilfläche der Oberfläche beträgt die Anzahl der weißen Pixel an der Gesamtzahl der Pixel 95 % (aktueller Weißwert). Die übliche Beleuchtung der Fertigungshalle reicht hierfür aus; eine zusätzliche Beleuchtung der Plattenoberfläche ist nicht notwendig. In der Maschinensteuerung wird ein entsprechender anfänglicher Grenzwert für den Weißwert von 95 % gespeichert.

Daraufhin wird die Kamera mit denselben Aufnahmeparametern und mit einer Geschwindigkeit von 35 m/min in vorgegebener Bewegungsrichtung 5 entlang der Oberfläche der Platte 1 bewegt. Dabei werden fortlaufend Aufnahmen weiterer Teilflächen 3 der Oberfläche erzeugt, die jeweils mit der vorherigen Teilfläche geringfügig überlappen. Alle Aufnahmen werden hinsichtlich ihres "Weißwertes" und der lokalen Position ausgewertet und die Daten abgespeichert. Der Grenzwert für den Weißwert wird dabei kontinuierlich an die Gegebenheiten bei der letzten Teilflächen-Aufnahme angepasst. Diese Anpassung erfolgt in der Weise, dass im hinteren Drittel der aktuellen Teilfläche - also demjenigen Drittel, das dem Ende der vorherigen Teilfläche am nächsten liegt - der Mittelwert des Weißwertes (in %) ermittelt wird. Anhand des so ermittelten Wertes wird dann der neue aktuelle Grenzwert bestimmt.

Die Fahrt der Kamera wird abgebrochen, sobald der "Hell-Dunkel-Vergleich" bei der Aufnahme einer Teilfläche 4 ergibt, dass der aktuelle, über die gesamte Teilfläche 4 gemittelte Weißwert (in %) den aktuellen Grenzwert um mehr als 5 % unterschreitet. Dies ist ein Hinweis auf eine Werkstückkante 2.

In aller Regel läuft die Auswertung der Abbildungsinformationen der Kamerabewegung nach. Daher wird im Fall einer Unterschreitung des Weißwert-Grenzwertes die Kamera anhand der gespeicherten Positionsdaten zu der betreffenden Teilfläche 4, die einen unzulässig verringerten Weißwert aufweist, zurückgefahren.

Eine weitere Herausforderung liegt darin, dass beim Abscannen mittels der Kamera häufig der Schneidrost, auf dem die Platte 1 aufliegt, Bereiche mit weißen und schwarzen Pixeln erzeugt, was die Ermittlung der wahren Kantenposition erschweren kann. Daher werden die Bereiche mit dunklen Pixeln durch Übersteuern der Kamera optisch verkleinert und dadurch eliminiert. Die im ersten Betriebsmodus der Kamera eingestellten Aufnahmeparameter können für diesen Zweck-je nach Breite der Gitterstruktur - bereits genügen. Dadurch verschwinden kleinere Bereiche mit dunklen Pixeln, so dass letztlich die Grenze zwischen heller Werkstückkante und dunkler Umgebung gut erkennbar übrig bleibt. Eine etwaige optische Verschiebung der wahren Kante infolge einer Übersteuerung der Kamera ist wegen der nachfolgenden Verfahrensschritte unerheblich und kann auch leicht korrigiert werden.

Von der so festgestellten Teilfläche 4 wird mittels der Kamera eine weitere Aufnahme mit einer höheren optischen Auflösung erzeugt (im zweiten Betriebsmodus). Die höhere Auflösung wird durch eine höhere Pixelanzahl pro Flächeneinheit erhalten.

Die so erzeugte, höher aufgelöste Aufnahme wird daraufhin mittels Bildauswertung ausgewertet und die Lage und der Winkel der betreffenden Werkstückkante 2 in Bezug auf das Maschinenkoordinatensystem exakt ermittelt und die Daten abgespeichert. Dabei können auch angefaste Kanten erkannt und bestimmt werden.

### Schritt 2:

Nach Ermittlung der Plattenkante 2 (Lage und Winkel) fährt die Kamera mit Hilfe der ausgewerteten Informationen eine Suchfahrt im schnellen Betriebsmodus (niedrige Auflösung) entlang der Kante 2 bis die Ecke A in den dabei aufgenommenen Bildern gefunden wird. Die Auswertung erfolgt auf Basis einer Aufnahme mit hoher Auflösung. Mit den gesammelten Informationen kann somit der Eckpunkt A und der Verkippungswinkel der Platte 1 zum Maschinenkoordinatensystem noch genauer bestimmt werden.

Für den Fall, dass sich die Ecke A zufällig in der ausgewerteten Teilfläche 4 befindet, erübrigt sich die Suchfahrt entlang der Kante 2 in Richtung des Eckpunktes. Andernfalls wird diese Suchfahrt mittels der Kamera ausgeführt. Liegt die Kante A entfernt von der Teilfläche 4 kann die Genauigkeit der Winkelermittlung erhöht werden, indem ein Punkt auf der Kante 2 der Aufnahme der Teilfläche 4 und der Eckpunkt A zur Bestimmung des Winkels benutzt werden.

Um die Genauigkeit der Bestimmung des Winkels noch weiter zu erhöhen, kann nach der Findung der Ecke A ergänzend eine Aufnahme einer weiteren Teilfläche 7 im Bereich einer der beiden Kanten 2, 6 des Eckpunktes A erzeugt werden. Je weiter diese Teilfläche 7 vom Eckpunkt A entfernt ist, desto genauer wird die Winkelmessung. Somit wird die Aufnahme der Teilfläche 4 auf der Kante 2 mit dem Eckpunkt A und die Aufnahme der entfernten Teilfläche 7 ausgewertet und zur Bestimmung des Winkels genutzt.

In dem Fall, dass sich der Eckpunkt A der Platte 1 immer in einem definierten Bereich befindet, der kleiner als die Größe der Abbildung (=Aufnahme) ist, kann der Eckpunkt auch direkt angefahren werden, oder mit einer feststehenden Kamera aufgenommen werden.

### Schritt 3

**Figur 2** zeigt schematisch das Vorgehen zum Ermitteln der Größe der Platte 1 nach Findung der Plattenlage. Hierzu erfolgt mit den gesammelten Informationen eine Suchfahrt auf einer der beiden Kanten 2, 7 der Ecke A bis zum benachbarten Eckpunkt B. Nach Auswertung der Lage und des Winkels des zweiten Eckpunktes B erfolgt auf der neu gefundenen Kante 8 eine Suchfahrt bis zum dritten Eckpunkt C. Mit diesen Informationen werden die Länge und Breite der Platte 1 bestimmt.

Die Erfindung ist auch für die Erkennung eines vorhandenen Bauteils als Fertigungsvorlage für ein neues Bauteil, für die Digitalisierung einer technischen Zeichnung eines zu schneidenden Bauteils und für die Aufnahme und Erkennung von Restplatten einsetzbar. Dies wird im Folgenden näher erläutert:

### 2. Erkennung von Bauteilen

Die Bauteile werden mit der CMOS oder CCD Kamera aufgenommen und die Innen und Außenkonturen digitalisiert. Das digitalisierte Bauteil wird zur weiteren Verarbeitung anderen Applikationen zur Verfügung gestellt.

Ist das Bauteil kleiner als die Größe der mittels der Kamera erzeugten Aufnahme, werden die Konturen direkt aus der Aufnahme digitalisiert.

Ist das Bauteil größer als die Größe des Aufnahmebereichs der Kamera, werden rasterweise mehrere Aufnahmen in x- und y-Richtung aufgenommen und mittels der Stitching-Technik zu einem Image zusammengesetzt. Aus diesem Image werden anschließend die Innen- und Außenkonturen des Bauteils digitalisiert.

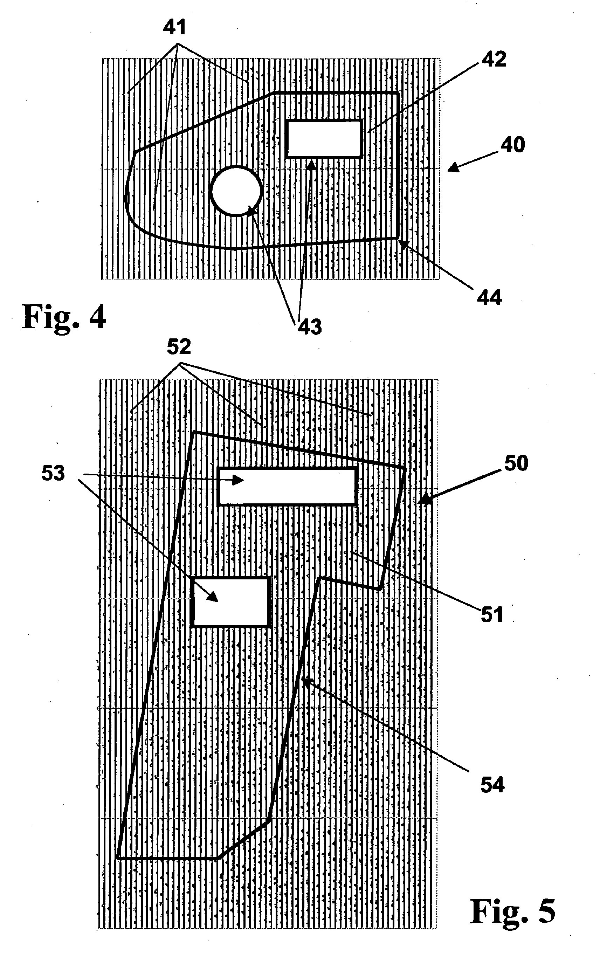

**Figur 4** zeigt schematisch ein Image 40 eines Bauteils 42 mit Innenkontur 43 und Außenkontur 44, das anhand insgesamt sechs Aufnahmen 41 zusammengesetzt ist. Zur Erkennung der Bauteil-Konturen (43; 44) wird das Image 40 digitalisiert.

### 3. Digitalisierung von Zeichnungen

Eine technische Zeichnung enthält ein oder mehrerer Bauteile. Mit einer CMOS oder CCD Kamera wird die Zeichnung aufgenommen und die Innen und Außenkonturen digitalisiert. Das digitalisierte Bauteil bzw. die digitalisierten Bauteile werden zur weiteren Verarbeitung anderen Applikationen zur Verfügung gestellt.

Ist die Zeichnung kleiner als die Größe der mittels der Kamera erzeugten Aufnahme, wird die Werkstückkontur direkt aus der Aufnahme digitalisiert.

Ist die Zeichnung größer als die Größe des Aufnahmebereichs der Kamera, werden rasterweise mehrere Aufnahmen in x- und y-Richtung aufgenommen und beispielsweise mittels der Stitching-Technik zu einem Image zusammengesetzt. Aus diesem Image werden anschließend die Innen- und Außenkonturen des Werkstücks digitalisiert.

### 4. Aufnahme von Restplatten

Die Aufnahme von Restplatten in **Figur 5** schematisch dargestellt. Um eine Restplatte 51 aufzunehmen, wird die Kamera mittels der Maschinensteuerung rasterweise in x- und y-Richtung verfahren über die gesamte Plattenfläche verfahren, um Einzelbilder 52 der Platte 51 aufzunehmen. Die Einzelbilder werden zu einem Gesamtimage 50 zusammengesetzt, und die Innen (53)- und Außenkonturen (54) digitalisiert. Die digitalisierte Restplatte 51 wird zur Weiterverarbeitung anderen Applikationen zu Verfügung gestellt.

Im Einzelnen werden mittels des erfindungsgemäßen Verfahrens und der Vorrichtung mittels einer mitfahrenden oder stehenden CMOS-Kamera oder CCD-Kamera folgende Aufgaben gelöst.

Finden eines Werkstücks (einer Platte) auf dem Schneidetisch und anschließende Auswertung der Lage (beispielsweise mittels eines Start-Eckpunkts der Platte und des Lagewinkels relativ zum Maschinenkoordinatensystem) und der Abmessungen (Länge, Breite).

Aufnahme von Werkstücken und Digitalisierung der Innen- und Außenkonturen. Die digitalen Werkstück-Informationen werden an die Maschinensteuerung zurückgemeldet und dienen zum Schneiden des Bauteils, insbesondere zum Verschachteln mit Bauteil-Konturen zu schneidender Bauteile.

Aufnahme und Digitalisierung von Zeichnungen zur Ermittlung von Bauteilen beziehungsweise von Schachtelplänen. Die digitalen Daten des Bauteils oder der Zeichnung werden an die Maschinensteuerung gemeldet und dienen zum Schneiden des Bauteils, insbesondere zum Verschachteln.

Aufnahme eines Restbleches und Auswertung durch Digitalisierung der Außenkonturen und etwaiger Innenkonturen. Die digitalen Daten werden in die Maschinensteuerung übernommen. In das Restblech können Bauteil-Konturen zu schneidender Bauteile geschachtelt werden.

Die Vorteile des erfindungsgemäßen Verfahrens liegen vorallem in einer hohen Präzision der Messung, einem schnellen Ablauf der Messung, einem hohen Automatisierungsgrad und in der Materialunabhängigkeit.

Den oben näher erläuterten Verfahrensweisen gemeinsam ist ein Konzept zur Ermittlung von Kanten und Konturen eines Werkstücks (sei es als zu schneidende Platte, als reales Muster-Bauteil oder in Form einer technischen Bauteil-Zeichnung oder als Rest-Bauteil), das im Folgenden näher erläutert wird.

Das Konzept umfasst einen ersten Erfassungsschritt, bei dem mittels der Kamera ein "Hell-Dunkel-Vergleich" des Werkstücks und seiner Umgebung (in der Regel ist dies eine Auflage, wie etwa ein Schneidetisch) durchgeführt wird, und einen zweiten Erfassungsschritt, bei dem an einer anhand des Hell-Dunkel-Vergleichs ermittelten Position (wie etwa einer Kantenposition) eine optische Aufnahme erzeugt und diese anschließend ausgewertet wird.

Der Hell-Dunkel-Vergleich wird mit einer ersten, geringeren optischen Auflösung, und die zur Auswertung bestimmte optische Aufnahme mit einer zweiten, höheren optischen Auflösung durchgeführt. Der Hell-Dunkel-Vergleich wird beispielsweise ausgeführt, indem die Kamera in einem Schwarz-Weiß-Modus betrieben wird. Die geringere Auflösung erlaubt eine schnelle Erfassung von Hell-Dunkel-Mustern und gegebenenfalls eine rasche Relativbewegung zwischen Kamera und Werkstück. Hierzu wird die Werkstückoberfläche vorzugsweise mittels einer Lampe so bestrahlt, dass sie extrem hell (extrem weiß) erscheint, und die Auflage extrem dunkel. Auf diese Weise werden beim Hell-Dunkel-Vergleich die Kanten des Werkstücks rasch, genau und reproduzierbar erkannt. Hierzu können auch die Kameraeinstellungen beitragen, beispielsweise durch Einstellen eines hohen Kontrastes.

In der Praxis zeigt jedoch auch die Auflage des Werkstücks häufig helle Bereiche. Beispielsweise bei der Auflage des Werkstücks auf einem Schneidrost oder der Rand einer technischen Zeichnung. Diese können die Ermittlung der Kantenposition verfälschen. Erfindungsgemäß werden diese Bereiche im Verlauf des Hell-Dunkel-Vergleichs auf folgende Weise eliminiert und so die exakte Kantenlage des Werkstücks ermittelt: Über der Werkstückoberfläche erfasst die Kamera in der Regel (fast) nur helle (weiße) Pixel. Diese werden ausgewertet, zum Beispiel gezählt. Im Bereich der Werkstückkante werden zunehmend dunkle (schwarze) Pixel erkannt, die jedoch von hellen Pixeln umgeben sein können (Gitter des Schneidrosts). Bei deutlicher Zunahme dunkler Pixel ist eine Kante zu vermuten. Um ein Überfahren der Kante zu vermeiden wird die Kamera wieder ein Stück zurück bewegt.

Anschließend werden die Bereiche mit hellen Pixeln rechnerisch oder optisch verkleinert oder eliminiert, zum Beispiel durch rechnerisches Vergrößern der dunklen Bereiche, oder durch Überstrahlen oder durch Übersteuern der Kamera. Dadurch verschwinden die kleineren Bereiche mit hellen Pixeln, so dass letztlich die Grenze zwischen heller Werkstückkante und dunkler Umgebung gut erkennbar übrig bleibt. Deren Position ist somit genau zu erkennen. Die durch rechnerische oder optische Verkleinerung der hellen Pixelbereiche erzeugte Verschiebung der Kante kann leicht berücksichtigt und entsprechend korrigiert werden.

Nach Abschluss der Ermittlung der Kantenposition wird im zweiten Erfassungsschritt eine Aufnahme der Kante mit höherer optischer Auflösung erzeugt, die eine genauere Auswertung der Kantenlage ermöglicht. Diese Aufnahme liegt vorzugsweise als Farbfoto, besonders bevorzugt als Graustufen-Foto vor.

Auf diese Art und Weise wird die Lage und Position der Werkstückkante in Bezug auf das Maschinenkoordinatensystem exakt, reproduzierbar und schnell ermittelt.

## Patentansprüche

1. Verfahren zum maschinellen Schneiden eines plattenförmigen Werkstücks, umfassend ein berührungsloses, optisches Erfassen der Lage und/oder der Geometrie und/oder von Abmessungen des Werkstücks mittels einer Kamera, und eine Auswertung mittels Bildverarbeitung, **dadurch gekennzeichnet, dass** das Erfassen einen Verfahrensschritt zur groben Lokalisierung einer Werkstückkante umfasst, bei dem die Kamera in einem ersten Betriebsmodus mit geringerer optischer Auflösung betrieben wird, und einen zweiten Verfahrensschritt zur Ermittlung der genauen Positionsdaten der aufgefundenen Werkstückkante, bei dem die Kamera in einem zweiten Betriebsmodus mit höherer optischer Auflösung betrieben wird, wobei das Erfassen folgende Verfahrensschritte umfasst:
a) Positionieren der Kamera derart, dass eine Aufnahme einer ersten Teilfläche der Oberfläche des Werkstücks erhalten wird,
b) Einstellen von dem ersten Betriebsmodus entsprechenden ersten Aufnahmeparametem der Kamera derart, dass die Aufnahme einen hohen Weißwert mit überwiegend weißen Pixeln zeigt, und Auswerten der Aufnahme unter Gewinnung einer ersten Gruppe von Aufnahme- und Positionsdaten,
c) Bewegen der Kamera im ersten Betriebsmodus in vorgegebener Bewegungsrichtung um eine vorgegebene Bewegungsstrecke derart, dass eine Aufnahme einer weiteren, aktuellen Teilfläche erhalten wird, welche versetzt zur vorherigen Teilfläche angeordnet ist und mit dieser in einem Überlappungsbereich überlappt, und Auswerten der Aufnahme unter Gewinnung einer aktuellen Gruppe von Aufnahme- und Positionsdaten,
d) Abgleich der Aufnahmedaten von vorheriger und aktueller Gruppe oder Auswertung der Aufnahmedaten nur der aktuellen Teilfläche zwecks Feststellung, ob der Weißwert der Aufnahme der aktuellen Teilfläche einen vorgegebenen relativen oder absoluten Grenzwert unterschreitet oder nicht, und danach
e) Eventuel, im Verneinungsfall, Weiterbewegen der Kamera im ersten Betriebsmodus in der vorgegebenen Bewegungsrichtung und um die vorgegebene Bewegungsstrecke und iterative Wiederholung der Verfahrensschritte c) und d) zur Aufnahme und Auswertung der Aufnahmedaten mindestens einer weiteren, aktuellen Teilfläche,
f) im Bejahensfall, Einstellen von zweiten Aufnahmeparametern, die dem zweiten Betriebsmodus der Kamera entsprechen und die im Vergleich zu den ersten Aufnahmeparametern eine höhere Bildauflösung erlauben, und Erzeugen einer Aufnahme mit höherer Auflösung von der Teilfläche mit einem Weißwert unterhalb des Grenzwerts, und Auswerten der Aufnahme in Bezug auf die Lage einer Werkstückkante.

2. Verfahren nach Anspruch 1, **dadurch gekennzeichnet, dass** mittels der Kamera beim Betrieb im zweiten Betriebsmodus mit höherer optischer Auflösung eine Abbildung im Bereich der aufgefundenen Werkstückkante erzeugt wird, die Abbildung mittels der Bildverarbeitung ausgewertet wird.

3. Verfahren nach Anspruch 1, **dadurch gekennzeichnet, dass** die ersten Aufnahmeparameter der Kamera bei Verfahrensschritt b) derart eingestellt werden, dass die Aufnahme einen Weißwert mit mindestens 80 %, vorzugsweise mindestens 90%, weißen Pixeln zeigt.

4. Verfahren nach Anspruch 1 oder 3, **dadurch gekennzeichnet, dass** im Bejahensfall dem Verfahrensschritt f) eine Maßnahme vorangeht, bei der Flächenbereiche der Aufnahme mit überwiegend schwarzen Pixeln optisch oder rechnerisch ausgeblendet werden.

5. Verfahren nach einem der Ansprüche 1, 3 oder 4, **dadurch gekennzeichnet, dass** im Bejahensfall dem Verfahrensschritt f) eine Maßnahme vorangeht, bei der die Kamera auf die Teilfläche mit einem Weißwert unterhalb des Grenzwerts entgegen der Bewegungsrichtung zurückbewegt wird.

6. Verfahren nach einem der Ansprüche 1 oder 3 bis 5, **dadurch gekennzeichnet, dass** das Bewegen der Kamera gemäß Verfahrensschritt c) mit einer Bewegungsgeschwindigkeit von mindestens 20 m/min, vorzugsweise mindestens 35 m/min, erfolgt.

7. Verfahren nach einem der Ansprüche 1 oder 3 bis 6, **dadurch gekennzeichnet, dass** der Grenzwert gemäß Verfahrensschritt d) variabel in Abhängigkeit des Weißwerts der vorherigen Teilflächen-Aufnahme eingestellt wird.

8. Verfahren nach einem der vorhergehenden Ansprüche, **dadurch gekennzeichnet, dass** als Kamera eine Graustufen-Kamera eingesetzt wird.

9. Verfahren nach einem der vorhergehenden Ansprüche, **dadurch gekennzeichnet, dass** im ersten Betriebsmodus die Blende der Kamera so eingestellt wird, dass sich eine Tiefenschärfe von mindestens 20 mm, vorzugsweise mindestens 30 mm, erhalten wird.

10. Verfahren nach einem der vorhergehenden Ansprüche, **dadurch gekennzeichnet, dass** eine Kamera mit automatischem Zoom eingesetzt wird.

11. Verfahren nach einem der vorhergehenden Ansprüche, **dadurch gekennzeichnet, dass** die Kamera höhenverstellbar ist.

12. Verfahren nach einem der vorhergehenden Ansprüche, **dadurch gekennzeichnet, dass** eine Kamera mit einem Weitwinkelobjektiv eingesetzt wird.

## Claims

1. A method for machine-cutting a plate-shaped workpiece, comprising contactless optical recording of data regarding position and/or geometry and/or dimensions of the workpiece using a camera, and evaluating the recorded data using image processing, **characterized in that** the recording of the data comprises a method step of coarsely locating of a workpiece edge, in which the camera is operated in a first operative mode with lower optical resolution, and a second method step for determining the exact positional data of the found workpiece edge, in which the camera is operated in a second operative mode with optical resolution higher than said first optical resolution, whereby the recording operation comprises the following method steps:
a) positioning the camera such that a recording of a first sub-area of the surface of the workpiece is obtained;
b) setting first recording parameters of the camera corresponding to the first operative mode such that the recording shows a high white level with predominantly white pixels, and evaluating the recording to obtain a first group of recording and positional data;
c) moving the camera in the first operative mode in a predetermined direction of movement on a predetermined movement path such that a recording of a further actual sub-area is obtained, said sub-area being offset from the preceding sub-area and overlapping said sub-area in an overlap region, and evaluating the recording to obtain an actual group of recording and positional data;
d) matching the recording data of former and actual group or evaluating the recording data only of the actual sub-area for detecting whether or not the white level of the recording of the actual sub-area is less than a predetermined relative or absolute limit value, and thereafter
e) eventually, in case of no, further moving the camera in the first operative mode in the predetermined direction of movement and by the predetermined movement distance and iteratively repeating method steps c) and d) so as to record and evaluate the recording data of at least a further actual sub-area;
f) in case of yes, setting second recording parameters that correspond to the second operative mode of the camera and at a higher resolution than the first recording parameters, and producing a recording of a higher resolution from the sub-area with a white level below the limit value, and evaluating the higher resolution recording with respect to the position of a workpiece edge.

2. The method according to claim 1, **characterized in that** an image in the area of the found workpiece edge is generated using the camera during operation in the second operative mode with higher optical resolution, and the image is evaluated using image processing.

3. The method according to claim 1, **characterized in that** the first recording parameters of the camera in method step b) are set such that the recording shows a white level with at least 80%, preferably at least 90%, white pixels.

4. The method according to claim 1 or 3, **characterized in that**, in case of yes, method step f) is preceded by a measure in which surface areas of the recording with predominantly black pixels are optically or mathematically eliminated.

5. The method according to one of the claims 1, 3 or 4, **characterized in that**, in case of yes, method step f) is preceded by a measure in which the camera is moved back to the sub-area with a white level below the limit value in a direction opposite the direction of movement.

6. The method according to one of the claims 1 or 3 to 5, **characterized in that** the movement of the camera according to method step c) takes place at a movement speed of at least 20 m/min, preferably at least 35 m/min.

7. The method according to one of the claims 1 or 3 to 6, **characterized in that** the limit value according to method step d) is variably set in dependence upon the white level of the preceding sub-area recording.

8. The method according to claim 1, **characterized in that** a gray scale camera is used as the camera.

9. The method according to claim 1, **characterized in that** in the first operative mode the aperture of the camera is set such that a depth of focus of at least 20 mm, preferably at least 30 mm, is obtained.

10. The method according to claim 1, **characterized in that** a camera is used with an automatic zoom.

11. The method according to claim 1, **characterized in that** the camera is adjustable in height.

12. The method according to claim 1, **characterized in that** a camera is used with a wide-angle lens.

## Revendications

1. Procédé pour la découpe mécanique d'une pièce à usiner en forme de plaque, comprenant une saisie sans contact optique de la position et/ou de la géométrie et/ou de dimensions de la pièce à usiner au moyen d'une caméra et une analyse au moyen d'un traitement d'image, **caractérisé en ce que** la saisie comprend une étape de procédé pour la localisation globale d'un bord de pièce d'usinage, où la caméra fonctionne dans un premier mode de fonctionnent avec une résolution optique plus faible et une second étape de procédé pour la détermination des données exactes de procédé du bord de pièce à usiner détecté, la caméra étant utilisée dans un second mode de service avec une résolution optique plus élevée, la saisie comprenant les étapes de procédé suivantes :
a) positionnement de la caméra de sorte qu'une prise de vue d'une première partie de la surface de la pièce à usiner est obtenue,
b) réglage de premiers paramètres de prise de vue correspondant au premier mode de service, de la caméra de sorte que la prise de vue montre une valeur de blanc élevée avec une majorité de pixel blancs et analyse de la prise de vue en gagnant un premier groupe de données de positions et de prises de vue,
c) déplacement de la caméra dans le premier mode de service dans une direction de mouvement prédéterminé autour d'une trajectoire de mouvement prédéterminée de sorte qu'une prise de vue d'une autre surface partielle actuelle est obtenue qui est disposée en décalé par rapport à la surface partielle précédente et qui se chevauche avec cette dernière dans une zone de chevauchement et analyse de la prise de vue en obtenant un groupe actuel de données de position et de prises de vue,
d) comparaison des données de prise de vue du groupe précédent et actuel ou analyse des données de prise de vue uniquement de la su4race actuelle partielle dans un but de déterminer si la valeur de blanc de la prise de vue de la surface partielle actuelle ne dépasse pas une valeur limite relative ou absolue prédéterminée et ensuite
e) éventuellement en cas de réponse négative, poursuite du déplacement de la caméra dans le premier mode de service dans la direction de mouvement prédéterminé et autour du trajet prédéterminé de mouvement et répétition itérative des étapes de procédé c) et d) pour la prise de vue et l'analyse des données de prise de vue au moins d'une autre surface partielle actuelle,
f) en cas de réponse positive, réglage de seconds paramètres de prise de vie qui correspondent au second mode de service de la caméra et qui permettent en comparaison aux premiers paramètres de prise de vue une résolution d'image plus élevée et une génération d'une prise de vue avec une résolution plus élevée de la surface partielle avec une valeur de blanc en dessous de la valeur limite et analyse de la prise de vue par rapport à la position d'un bord de pièce d'usinage.

2. Procédé selon la revendication 1, **caractérisé en ce qu'**au moyen de la caméra en cours de service, dans le second mode de service avec une résolution optique plus élevée, il est généré une reproduction dans la zone du bord de pièces d'usinage inspectée et la reproduction est analysée au moyen du traitement de l'image.

3. Procédé selon la revendication 1, **caractérisé en ce que** les premiers paramètres de prise de vue de la caméra sont régulés dans l'étape de procédé b) de sorte que la prise de vue présente une valeur de blanc d'au moins 80 % de préférence au moins 90 % de pixels blancs.

4. Procédé selon la revendication 1 ou 3, **caractérisé en ce que** dans le cas affirmatif, l'étape de procédé f) précède une mesure où des zones de surface de la prise de vue avec des pixels principalement noirs sont occultées optiquement ou par calcul.

5. Procédé selon l'une des revendications 1, 3 ou 4, **caractérisé en ce que** dans le cas affirmatif l'étape de procédé f) précède une mesure où la caméra est ramenée à la surface partielle avec une valeur de blanc en dessous de la valeur limite à l'encontre de la direction de mouvement.

6. Procédé selon l'une des revendications 1 ou 3 à 5, **caractérisé en ce que** le déplacement de la caméra s'effectue selon l'étape de procédé c) avec une vitesse de déplacement d'au moins 20 m/min de préférence au moins 35 m/min.

7. Procédé selon l'une des revendications 1 ou 3 à 6, **caractérisé en ce que** la valeur limite selon l'étape de procédé d) est réglée de manière variable en fonction de la valeur de blanc de la prise de vue précédente de la surface partielle.

8. Procédé selon l'un des revendications précédences, **caractérisé en ce qu'**en tant que caméra, on utilise une caméra en nuance de gris.

9. Procédé selon l'une des revendications précédentes, **caractérisé en ce que** dans le premier mode de service, l'obturateur de la caméra est réglé de sorte qu'une netteté de profondeur d'au moins 20 mm, de préférence au moins 30 mm est conservée.

10. Procédé selon l'une des revendications précédentes, **caractérisé en ce qu'**une caméra avec un zoom automatique est utilisée.

11. Procédé selon l'une des revendications précédentes, **caractérisé en ce que** la caméra est réglable en hauteur.

12. Procédé selon l'une des revendications précédentes, **caractérisé en ce qu'**une caméra avec un objectif grand angle est utilisée.
